# EUROPEAN PATENT APPLICATION

(11) **EP 4 020 342 A1**
(43) Date of publication of application: **29.06.2022**
(21) Application number: 20855252.1
(22) Date of filing: 12.05.2020
(51) Int. Cl.: G06Q 10/00, G06Q 30/02

(54) **ASSISTANCE DEVICE AND ASSISTANCE PROGRAM**

(30) Priority: 22.08.2019 JP 2019151752
(71) Applicant: LIXIL Corporation, Koto-ku Tokyo 136-8535 (JP)
(72) Inventor: ONO, Katsuo, Tokyo 136-8535 (JP); YAMAMOTO, Satoshi, Tokyo 136-8535 (JP); NAGATA, Misaki, Tokyo 136-8535 (JP); YAMAZAKI, Masaki, Tokyo 136-8535 (JP)
(74) Representative: karo IP
(86) International application number: PCT/JP2020/018926
(87) International publication number: WO 2021/033373

(57) **Abstract**

An assistance device 50 includes: an object information acquirer 63 that acquires information regarding an object installed in a living space, in which the object is to be reformed, repaired, or produced; a detection information acquirer 61 that acquires a history of detection information detected in the past by a sensor installed in the living space; and a candidate presentation unit 65 that generates and presents a candidate for a method for renovating, repairing, or producing the object, based on information regarding the object acquired by the object information acquirer 63 and a history of the detection information acquired by the detection information acquirer 61.

## Description

### TECHNICAL FIELD

The present disclosure relates to an assistance device and an assistance program.

### BACKGROUND ART

Houses are important bases for people's lives. There have been provided various technologies for improving convenience and comfortability in the lives in houses (see Patent Literature 1, for example).

Patent Literature 1 discloses a technology for extracting concepts related to customers' lifestyles based on lifestyle data obtained from the customers' opinions and also extracting housing equipment and building components appropriate for the extracted concepts.

### PRIOR ART REFERENCE

### PATENT LITERTURE

Patent Literature 1: Japanese Unexamined Patent Application Publication No. 2007-58577

### SUMMARY OF INVENTION

### TECHNICAL PROBLEM

The inventors have considered that, besides providing housing equipment and building components, providing services for assisting with renovation, repair, or production of housing equipment and building components can further improve the convenience and comfortability in the lives in houses and therefore have conceived the technology of the present disclosure.

The present disclosure has been made in view of such an issue, and a purpose thereof is to provide a technology for improving convenience in renovation, repair, production, or the like.

### SOLUTION TO PROBLEM

In response to the above issue, an assistance device according to one embodiment of the present disclosure includes: an object information acquirer that acquires information regarding an object installed in a living space, in which the object is to be reformed, repaired, or produced; a detection information acquirer that acquires a history of detection information detected in the past by a sensor installed in the living space; and a candidate presentation unit that generates and presents a candidate for a method for renovating, repairing, or producing the object, based on information regarding the object acquired by the object information acquirer and a history of the detection information acquired by the detection information acquirer.

Optional combinations of the aforementioned constituting elements, and implementation of the present invention in the form of methods, apparatuses, systems, recording media, and computer programs may also be practiced as additional modes of the present invention.

### BRIEF DESCRIPTION OF DRAWINGS

FIG. 1 is a diagram that illustrates a configuration of an assistance system according to an embodiment;
FIG. 2 is a diagram that illustrates a configuration of an assistance device according to the embodiment; and
FIG. 3 is a diagram that shows an example of a candidate method for renovation presented by a candidate presentation unit.

### DESCRIPTION OF EMBODIMENTS

When a resident of a living space (hereinafter also referred to as a "user") plans to conduct renovation, repair, or production (hereinafter may be collectively referred to as "renovation or the like") of an object, such as equipment, a device, furniture, or a building component, an assistance system according to an embodiment of the present disclosure proposes a candidate method for the renovation or the like. By means of various sensors installed in the living space, the assistance system detects and records detection information indicating, for example, the conditions, behavior, and life modes of a user, a person living with the user, a pet animal, and the like, and the condition, usage mode, and the like of an object. Based on a history of detection information detected and recorded in the past, the assistance system generates and presents a candidate method for renovation or the like. Accordingly, the system can appropriately select and propose a method for renovation or the like suitable for the condition, behavior, and life mode of the user or the like, and the condition and usage mode of an object, for example. Therefore, the user's convenience can be improved.

The assistance system may generate a candidate method for renovation or the like further based on preference of the user or a person living with the user regarding attributes or design. Accordingly, the system can propose a method for renovation or the like also suitable for the user's attributes and preference, besides the condition of the user or an object or the like. Therefore, the user's convenience can be further improved.

The assistance system may present, to the user, multiple operations included in a method presented as a candidate to the user that are classified into operations to be performed by the user and operations to be asked of others. When the user tries to do DIY on a holiday to renovate, repair, or produce furniture or the like, the user may sometimes find it difficult to do all the operations by him or herself. Accordingly, based on the user's skills and the like, the assistance system may classify the operations into operations that can be performed by the user and operations to be asked of a business operator or the like and may then present the operations thus classified to the user. This can further improve the user's convenience.

In the assistance system, the sensors used to detect detection information may be installed in, besides a house, an arbitrary living space including a building or premises where people live, lodge, or stay, such as an accommodation facility, premises including a parking space or a yard provided with a house or an accommodation facility, and a facility where babies and infants or elderly people can stay. The present embodiment mainly describes an example in which the sensors are installed within a house.

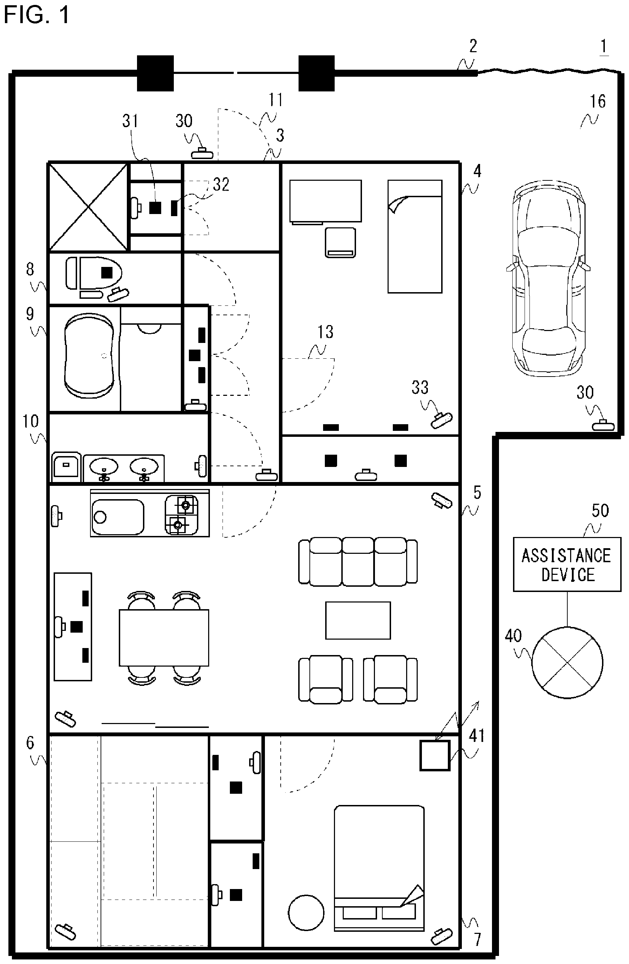

FIG. 1 illustrates a configuration of an assistance system according to the embodiment. An assistance system 1 includes sensors and an assistance device 50. Each sensor detects detection information indicating the position or condition of a user 20 who lives in a house 2 or the position or condition of an object. The assistance device 50 assists with renovation, repair, or production of an object, such as equipment, a device, or a building component, within the house 2. The house 2 includes multiple indoor areas including an entrance 3, a Western-style room 4, a living room (LDK) 5, a Japanese-style room 6, a bed room 7, a toilet 8, a bathroom 9, and a washroom 10, and multiple outdoor areas including a parking space 16.

As examples of the sensors, an image sensor 30, a load sensor 31, an opening/closing sensor 32, and a 3D sensor 33 are installed in the house 2. Such sensors are installed on building components, furniture, devices, or equipment installed in the house 2 to detect information automatically and continuously. The pieces of information detected by such sensors are transmitted to a home server 41 via wireless communication. The home server 41 transmits the gathered pieces of information to the assistance device 50 via the Internet 40.

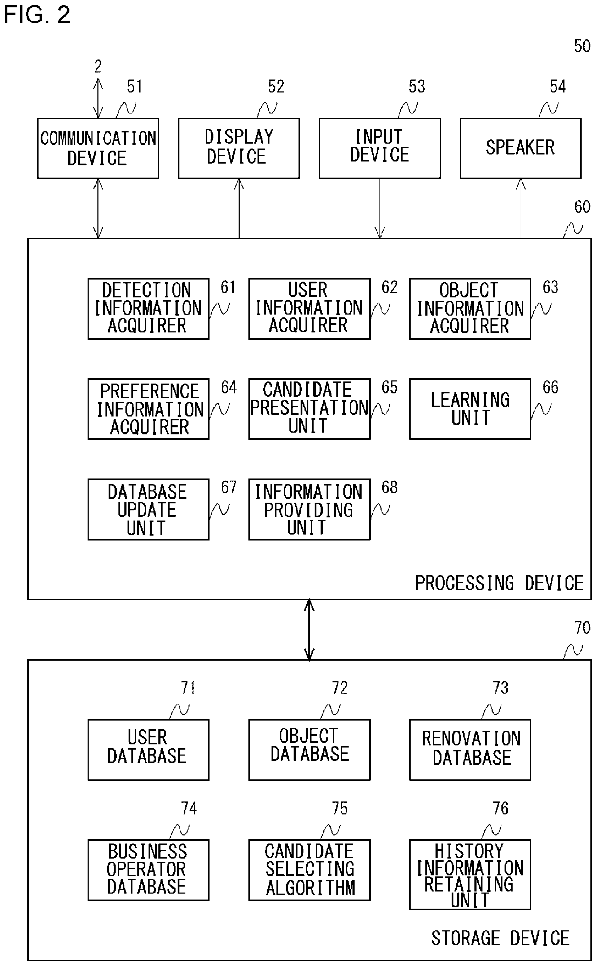

FIG. 2 illustrates a configuration of the assistance device according to the embodiment. The assistance device 50 includes a communication device 51, a display device 52, an input device 53, a speaker 54, a control device 60, and a storage device 70. The assistance device 50 may be a server device, a personal computer, or another device, or may be a mobile terminal, such as a cellular phone terminal, a smartphone, or a tablet terminal.

The communication device 51 controls communication with other devices via a communication network, such as the Internet 40. The communication device 51 may perform communication using an arbitrary wired or wireless communication scheme. The display device 52 displays a screen generated by the control device 60. The display device 52 may be a liquid crystal display device, an organic EL display device, or the like. The input device 53 transmits, to the control device 60, an instruction entered by a user or a manager of the assistance device 50. The input device 53 may be a mouse, a keyboard, a touch pad, or the like. The display device 52 and the input device 53 may be implemented as a touch panel. The speaker 54 outputs voice generated by the control device 60. The input device 53 may be a microphone for receiving voice and may convert the voice into text information using a voice recognition technology to input the text information.

The storage device 70 stores programs, data, and the like used by the control device 60. The storage device 70 may be semiconductor memory, a hard disk, or the like. The storage device 70 includes a user database 71, an object database 72, a renovation database 73, a business operator database 74, a candidate selecting algorithm 75, and a history information retaining unit 76.

The user database 71 includes information on a user whom the assistance device 50 assists. The user database 71 includes, for example, attribute information including the gender, age, blood type, and occupation of a user, biological information including the height, weight, and health conditions of the user, and preference information including hobbies, favorite foods and drinks, preference for design, and the type of a pet animal of the user.

The object database 72 includes information regarding an object, such as equipment, a device, or a building component, to be renovated, repaired, or produced, and materials and tools necessary to renovate, repair, or produce the object. The object database 72 includes information such as the type, size, color, material, appearance, design, functions, price, means of acquisition, and seller of an object. The object database 72 also includes information regarding a commercially available product, an object renovated, repaired, or produced by a user, and an object designed by the manager of the assistance system 1 or a user.

The renovation database 73 includes information regarding a method for renovating, repairing, or producing an object. The renovation database 73 includes information regarding the processes of a method for renovating, repairing, or producing an object and information regarding operations in the respective processes. The information regarding operations is stored such as to be classified into information regarding operations to be performed by a user and information regarding operations to be asked of a business operator, such as a builder. As the information regarding an operation to be performed by a user, information such as the design drawing of an object, the details of the operation, the types of materials or tools necessary for the operation, the space size required for the operation, the difficulty level of the operation, and the time required for the operation is stored. As the information regarding an operation to be asked of a business operator, information such as the cost, the period required until the operation finishes, and the method for transporting an object is stored for each business operator that can perform the operation.

The business operator database 74 includes information regarding business operators that each perform part of or the entirety of an operation included in a method for renovating, repairing, or producing an object. The business operator database 74 includes information such as the whereabouts, the contact address, the details of available operations, an average period required for an operation, an average fee structure, and the reputation of each business operator.

The candidate selecting algorithm 75 is an algorithm used to select a candidate method for renovating, repairing, or producing an object. The candidate selecting algorithm 75 extracts, from among methods for renovating, repairing, or producing an object included in the renovation database 73, a candidate method suitable for the life mode, condition, or preference of a user or the specification requested from the user, for example. The candidate selecting algorithm 75 may extract from the object database 72 an object suitable for the life mode, condition, or preference of the user or the specification requested from the user and may extract from the renovation database 73 a method for renovating, repairing, or producing the extracted product. The candidate selecting algorithm 75 may be a neural network or the like that inputs, to an input layer, information such as information regarding an object and the surroundings of the object, information regarding a user included in the user database 71, a detection information history stored in the history information retaining unit 76, the life mode or preference for design of the user analyzed based on the detection information, and the usage mode of the object and that outputs, from an output layer, an object appropriate for the input information or a candidate method for renovating, repairing, or producing an object. Also, the candidate selecting algorithm 75 may be a rule-based algorithm that associates a condition regarding the abovementioned information with an object or a candidate method to be recommended when the condition is satisfied. Also, the candidate selecting algorithm 75 may be an algorithm for performing scoring of an object included in the object database 72 or a method included in the renovation database 73, based on the abovementioned information. The candidate selecting algorithm 75 is provided for each type of object. Also, the candidate selecting algorithm 75 may be provided for each attribute of a user, such as the age, gender, or occupation, or may be provided for each user.

The history information retaining unit 76 stores history information, including detection information detected by a sensor or the like installed within the house 2, a result of detection information analysis, and a candidate method presented to a user.

The control device 60 includes a detection information acquirer 61, a user information acquirer 62, an object information acquirer 63, a preference information acquirer 64, a candidate presentation unit 65, a learning unit 66, a database update unit 67, and an information providing unit 68. Each of these configurations may be implemented by a CPU or memory of any given computer, an LSI, or the like in terms of hardware, and by a memory-loaded program or the like in terms of software. In the present embodiment are shown functional blocks realized by cooperation thereof. Therefore, it will be understood by those skilled in the art that these functional blocks may be implemented in a variety of forms by hardware only, a combination of hardware and software, or the like.

The detection information acquirer 61 acquires detection information detected by a sensor and stores the detection information in the history information retaining unit 76.

The user information acquirer 62 acquires information regarding a user and stores the information in the user database 71. The user information acquirer 62 may acquire, from a user via the input device 53 or the like, information such as attribute information, biological information, and the life mode of the user. Based on a detection information history stored in the history information retaining unit 76, the user information acquirer 62 may presume the condition, attributes, or behavior of the user, a person living with the user, or a pet animal. For example, the user information acquirer 62 may analyze a history of captured images of the user, a person living with the user, or an animal captured by the image sensor 30 or the 3D sensor 33 to presume information such as the condition, attributes, behavior, or the life mode of the user or the like.

The object information acquirer 63 acquires information regarding an object to be renovated, for example. The object information acquirer 63 receives designation of an object from a user via the input device 53 or the like. The object information acquirer 63 may receive, from the user via the input device 53 or the like, designation of a condition regarding an object, such as a condition regarding the specification, functions, and dimensions of the object. If an object designated by the user already exists in the house 2, the object information acquirer 63 may analyze a history of captured images of the object captured by the image sensor 30 or the 3D sensor 33 to acquire information such as the installation position, installation time, dimensions, appearance, design, material, and condition of the object, the dimensions of a space around the object, and the appearance and design of a device, equipment, furniture, and a building component installed around the object. Also, the object information acquirer 63 may analyze a history of opening and closing of a door or a drawer of the object detected by the opening/closing sensor 32 and a history of the weight of the object or the weight of an item put in or taken out of the object detected by the load sensor 31 so as to presume information including the condition and the usage mode of the object. If the object does not exist in the house 2, the object information acquirer 63 may receive designation of the installation position or dimensions of the object from the user via the input device 53 or the like. The object information acquirer 63 may refer to a captured image of a position designated as the installation position to acquire information such as the dimensions of a space around the installation position, and the appearance and design of a device, equipment, furniture, and a building component installed around the installation position.

The preference information acquirer 64 acquires information regarding the preference of a user or a person living with the user. The preference information acquirer 64 may acquire preference information regarding design or the like from the user via the input device 53 or the like. The preference information acquirer 64 may refer to a captured image of the interior of the house 2 captured by the image sensor 30 or the 3D sensor 33 to analyze the tendency of the design of equipment, devices, furniture, and building components installed in the house 2 or the design of clothes, accessories, and possessions of the user, so as to presume the user's preference information.

The candidate presentation unit 65 uses the candidate selecting algorithm 75 to generate a candidate method for renovating, repairing, or producing an object and presents the candidate method. The candidate presentation unit 65 uses the candidate selecting algorithm 75 appropriate for the type of the object designated by a user and selects a candidate from among methods for renovating, repairing, or producing the object included in the renovation database 73. The candidate presentation unit 65 may select an object from among objects included in the object database 72 and extract, from the renovation database 73, a method for renovating, repairing, or producing the object thus selected. Also, the candidate presentation unit 65 may perform filtering in advance on objects included in the object database 72 or methods included in the renovation database 73, based on a condition regarding an object designated by the user or whether or not the object can be installed. Whether or not the object can be installed may be determined based on the dimensions of a candidate object, the dimensions of a space around the installation position of the object, the surrounding environments of the installation position of the object, and the specification required for the candidate object, for example. The candidate presentation unit 65 may select a candidate for each of multiple components or materials constituting an object and may select a candidate method for renovating, repairing, or producing an object constituted by the components or materials thus selected.

The candidate presentation unit 65 presents a selected candidate to the user via the display device 52 or the like. When multiple candidates are selected, the candidate presentation unit 65 may perform scoring of the candidates to determine the order of display. The candidate presentation unit 65 may present, to the user, the operations included in a method presented as a candidate that are classified into operations to be performed by the user and operations to be asked of others. In this case, the candidate presentation unit 65 acquires, from the renovation database 73, the details of the operations included in the method presented as a candidate and also acquires information that indicates the user's skills or the like included in the user database 71. The candidate presentation unit 65 refers to the details of each operation included in the method presented as a candidate, the user's skills, the workspace, the operation time, and the like to determine whether or not the user can perform each operation by him or herself. With regard to an operation that the user can perform by him or herself, the candidate presentation unit 65 presents information such as the design drawing of the object, the details of the operation, the types of materials or tools necessary for the operation, the space size required for the operation, the difficulty level of the operation, and the time required for the operation. With regard to an operation to be asked of others, the candidate presentation unit 65 presents information such as the business operator that can perform the operation, the cost, the period required until the operation finishes, and the method for transporting the object.

The learning unit 66 performs machine learning for the candidate selecting algorithm 75 based on the information regarding an object, a detection information history, the condition, attributes, behavior, or preference information of a user or an animal, the information regarding the object, and the information regarding a method for renovating, repairing, or producing the object. The learning unit 66 may adjust weights of an intermediate layer in a neural network or a coefficient in a mathematical formula such that an object that matches the preference for design or the like presumed based on a detection information history and the condition, attributes, behavior, or preference information of a user or an animal is more likely to be selected as a candidate, before the learning unit 66 performs learning for the candidate selecting algorithm 75. The learning unit 66 may acquire information such as whether or not the user has actually performed a method presented as a candidate to the user and, if the user has performed the method, the performance consequences of the method or the evaluation by the user, so as to perform relearning for the candidate selecting algorithm 75 using the acquired information as teacher data. Also, the learning unit 66 may perform relearning for the candidate selecting algorithm 75 using, as teacher data, an analysis result of a history of detection information acquired by the detection information acquirer 61 after an object is renovated, repaired, or produced using a method presented as a candidate to the user. For example, when a candidate has been actually performed, when the performance consequences of the method or the evaluation for the method is positive, or when favorable detection information is acquired after the candidate has been actually performed, the learning unit 66 may adjust weights of an intermediate layer such that the candidate is more likely to be selected when the information included in the input layer at the time of selection of the candidate is input to the input layer of the neural network. Also, when a candidate has not been performed, when the performance consequences of the method or the evaluation for the method is negative, or when unfavorable detection information is acquired after the candidate has been actually performed, the learning unit 66 may adjust weights of an intermediate layer such that the candidate is less likely to be selected when the information included in the input layer at the time of selection of the candidate is input to the input layer of the neural network. Accordingly, a result obtained after the candidate selecting algorithm 75 is actually applied for the user can be fed back into the candidate selecting algorithm 75, so that a more appropriate candidate can be presented to assist the user.

The database update unit 67 acquires data to be registered in the user database 71, the object database 72, the renovation database 73, or the business operator database 74 and updates each database. For example, the database update unit 67 acquires, from a user who has renovated, repaired, or produced an object, information regarding the renovation or the like and updates the renovation database 73.

The information providing unit 68 transmits, to an information provision destination, detection information retained in the history information retaining unit 76, information regarding an object renovated, repaired, or produced by a user, or the like. The information providing unit 68 may provide the information to a business operator that performs renovation or the like, or a business operator that produces, sells, or maintains equipment, a device, furniture, or a building component to be renovated, for example. Also, the information providing unit 68 may charge a fee to an information provision destination based on the type or amount of information provided to the information provision destination or the timing of the provision.

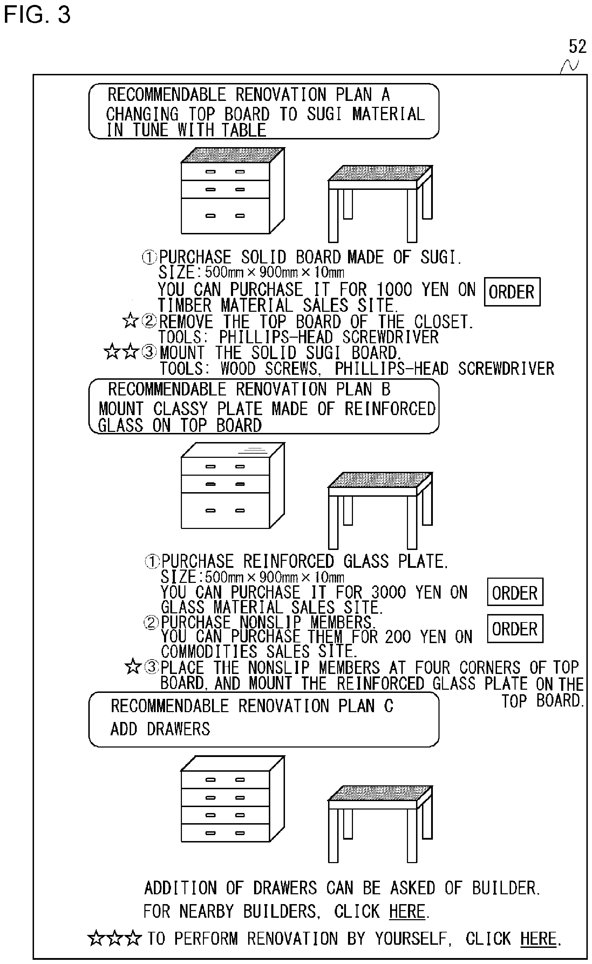

FIG. 3 shows an example of a candidate method for renovation presented by the candidate presentation unit. In the example of FIG. 3, the user desires renovation of a closet installed in the house 2. The object information acquirer 63 analyzes an image of the closet to acquire the dimensions of the closet. The preference information acquirer 64 analyzes an image of the closet and the vicinity thereof and acquires, as the user's preference information, the material of the top board of a table installed around the closet. The candidate presentation unit 65 extracts, from the object database 72, a closet with a top board of which the material is same as that of the top board of the table, as a candidate for the closet of which the design matches the user's preference. The candidate presentation unit 65 then extracts, from the renovation database 73, a method for renovation to the closet thus extracted and presents the method. For the operation of preparing materials in the extracted method, purchase in a timber sales site is proposed. When an order button provided on the presented screen is clicked, the candidate presentation unit 65 automatically orders a material on the timber sales site. With regard to the operation of removing the top board of the closet and mounting a new top board, it is judged that the user can perform the operation by him or herself, so that a method to be performed by the user is presented. The number of stars indicates the difficulty level of each operation to be performed by the user. Accordingly, the user can refer to the difficulty level to consider whether or not the user can perform the operation by him or herself.

The preference information acquirer 64 analyzes an image of another room in the house 2 and acquires, as the preference information, information that many pieces of furniture made with glass materials are installed therein. Accordingly, the candidate presentation unit 65 extracts, from the renovation database 73, a method of mounding a glass plate on the top board of the closet, as a candidate method for renovation to a closet of which the design matches the user's preference, and the candidate presentation unit 65 then presents the method.

The object information acquirer 63 analyzes a history of detection information detected by the opening/closing sensor 32 installed on a drawer of the closet and presumes the usage frequency of the drawer. Based on the usage frequency of the drawer, the candidate presentation unit 65 extracts, from the renovation database 73, a method for adding a drawer and presents the method.

It is judged that, in the extracted method, the operation of adding a drawer cannot be performed with the user's skills, so that asking the operation of a builder is proposed.

Specific examples of application of the assistance system 1 set forth above will be described below.

### Bathroom vanity

There will now be described an example in which a user renovates a bathroom vanity. The detection information acquirer 61 acquires an image of the existing bathroom vanity and the vicinity thereof captured by the image sensor 30 or the 3D sensor 33. The detection information acquirer 61 may acquire an image of the bathroom vanity and the vicinity thereof captured by the user with a mobile terminal or the like. The user information acquirer 62 acquires, from the user via the input device 53 or by analyzing a history of detection information detected by the image sensor 30 or the like, information such as the number and attributes of residents who use the bathroom vanity, the number and attributes of pet animals, and the usage frequency, usage purpose, and usage mode of the bathroom vanity. For example, the user information acquirer 62 acquires information that the times for using the bathroom vanity overlap among multiple residents, information that goods for a pet animal are washed by hand in the sink, and information that tools for calligraphy as a hobby are washed and placed on the bathroom vanity. The object information acquirer 63 analyzes an image of the bathroom vanity to acquire information such as the dimensions of the bathroom vanity, the specification of the bathroom vanity, including the number of faucets, the number of storage spaces, and the dimensions of a mirror, the type, position, and dimensions of an item placed around the bathroom vanity, and the position of equipment used for the bathroom vanity, such as water supply and an drain outlet. The preference information acquirer 64 acquires, from the user via the input device 53 or by analyzing a history of detection information detected by the image sensor 30 or the like, the user's preference information regarding the design, material, and texture of the bathroom vanity, for example.

The candidate presentation unit 65 inputs the abovementioned information to the candidate selecting algorithm 75 and selects a candidate object that matches the needs and preference of the user. The candidate presentation unit 65 extracts a method for producing the selected object from the renovation database 73. The candidate presentation unit 65 then presents a candidate for the extracted method to the user. The candidate presentation unit 65 may generate and present an image of the bathroom vanity renovated using the candidate for the extracted method. Also, the candidate presentation unit 65 may automatically order a material or component necessary for the method selected by the user or may ask an operation of a business operator.

### Flooring

There will now be described an example of renovating flooring laid in a house. The detection information acquirer 61 acquires an image of the floor in the house 2 captured by the image sensor 30 or the 3D sensor 33. The object information acquirer 63 acquires, from the user via the input device 53 or by analyzing detection information detected by the image sensor 30 or the like, information such as the dimensions and material of the flooring, whether or not a subfloor is provided, the type of the subfloor, whether or not a floor heating device is provided, the type of the floor heating device, whether or not an underfloor storage is provided, and the dimensions of the underfloor storage. The object information acquirer 63 also acquires, from the user via the input device 53 or by analyzing detection information detected by the image sensor 30 or the like, information such as whether or not furniture, such as a sofa or a curtain, is installed, the type and the position of the furniture, whether or not there is a load, such as a piano or a bookshelf, the weight and the position of the load, whether or not daylighting equipment, such as a window, is provided, the dimensions and the position of the daylighting equipment, whether or not there is wet equipment or a wet building component, such as a foliage plant, a kitchen, or a sink, the type and the position of the wet equipment or building component, whether or not a pet animal is kept, the type and the number of pet animals, whether or not there is an adjoining room, the position of the adjoining room, the attributes and the number of residents, and whether or not there is a resident having an allergy. The preference information acquirer 64 acquires, from the user via the input device 53 or by analyzing detection information detected by the image sensor 30 or the like, preference information regarding the design of equipment, devices, furniture, building components, and interior materials provided in the room, for example.

The candidate presentation unit 65 inputs the abovementioned information to the candidate selecting algorithm 75 and selects, from the object database 72, candidate flooring that matches the needs and preference of the user. The candidate presentation unit 65 refers to the renovation database 73 to determine the dimensions, color, pattern, design, function, layout, and laying direction of the selected flooring, the required number of flooring materials, and the construction method, for example. The candidate presentation unit 65 presents a candidate method for renovating the flooring to the user. The candidate presentation unit 65 may generate and present an image of the flooring renovated using the extracted candidate method. Also, the candidate presentation unit 65 may automatically order a material or component necessary for the method selected by the user or may ask an operation of a business operator.

### Storage furniture

There will now be described an example of producing new storage furniture. The detection information acquirer 61 acquires an image of the interior of the house 2 captured by the image sensor 30 or the 3D sensor 33. The object information acquirer 63 receives designation of the dimensions and the installation position of storage furniture from a user via the input device 53. Upon receiving designation of the dimensions of the storage furniture from the user, the object information acquirer 63 may refer to an image of the house 2 to determine a position where storage furniture having the received dimensions can be installed and may present the position to the user.

Also, upon receiving designation of the installation position of the storage furniture from the user, the object information acquirer 63 may refer to an image of the house 2 to determine the dimensions of the storage furniture that can be installed at the received installation position and may present the dimensions to the user. The object information acquirer 63 acquires, from the user via the input device 53 or by analyzing detection information detected by the image sensor 30 or the like, information such as the type, use, function, dimensions, volume, and weight of an item to be stored in the storage furniture, and the number of the items. The user information acquirer 62 acquires, from the user via the input device 53 or by analyzing detection information detected by the image sensor 30 or the like, information such as the family structure and the life mode of the user, a pet animal, and the floor plan of the house 2. The preference information acquirer 64 acquires, from the user via the input device 53 or by analyzing detection information detected by the image sensor 30 or the like, information regarding other equipment, devices, furniture, and building components provided in the room where the storage furniture is to be installed, and the user's preference information regarding design, for example.

Based on the abovementioned information, the candidate presentation unit 65 designs storage furniture suitable for the needs and preference of the user, the usage purpose, the installation position and the installation space of the storage furniture, and an item to be stored in the storage furniture, for example. Also, based on the abovementioned information, the candidate presentation unit 65 may select each of design elements, including the shape, dimensions, material, color, pattern, and texture of the storage furniture, the shape, dimensions, and number of drawers, whether or not a door is provided, and the shape and material of the door. The candidate presentation unit 65 then presents a candidate for the designed storage furniture to the user. The candidate presentation unit 65 may generate and present an image in which storage furniture produced using a presented candidate method is installed. Also, the candidate presentation unit 65 may automatically order a material or component necessary for the method selected by the user or may ask an operation of a business operator.

### Furniture for pets

There will now be described an example of producing furniture for a user's pet animal. The detection information acquirer 61 acquires detection information, such as an image of the interior of the house 2 captured by the image sensor 30 or the 3D sensor 33. The object information acquirer 63 acquires, from the user via the input device 53 or by analyzing detection information detected by the image sensor 30 or the like, information such as the floor plan of the house 2, the dimensions of the room, and the type, age, size, and liveliness of the user's pet animal. The preference information acquirer 64 acquires, from the user via the input device 53 or by analyzing a history of detection information detected by the image sensor 30 or the like, preference information regarding the design of equipment, devices, furniture, and building components provided in the house 2, for example.

Based on the type, age, size, and liveliness of the user's pet animal, the candidate presentation unit 65 extracts, from the object database 72, an object such as a catwalk or agility equipment appropriate for the amount of exercise required for the animal. Based on the dimensions of the room and the user's preference information, the candidate presentation unit 65 extracts a method for producing the extracted object from the renovation database 73. The candidate presentation unit 65 then presents an extracted candidate method to the user. The candidate presentation unit 65 may order a material or component necessary for the method selected by the user or may ask an operation of a business operator. Also, based on an analysis result of detection information acquired by the detection information acquirer 61 after an object is produced using the presented method, the candidate presentation unit 65 may propose a method for renovating the object. For example, the animal's exercise mode may be acquired by analyzing a moving image of the animal using the object, and the candidate presentation unit 65 may propose a candidate method for renovating the object such as to make the object appropriate for the animal's exercise mode.

Although the present embodiment describes example in which the assistance device 50 is provided for overall management of assists to multiple users, the assistance device 50 may be provided for each user. In this case, the home server 41 or a user's mobile terminal may have the functions of the assistance device 50, for example.

When the inventions embodied by the embodiment and modifications set forth above are generalized, the following technical ideas are derived.

One aspect of the present disclosure relates to an assistance device. The assistance device includes: an object information acquirer that acquires information regarding an object installed in a living space, in which the object is to be reformed, repaired, or produced; a detection information acquirer that acquires a history of detection information detected in the past by a sensor installed in the living space; and a candidate presentation unit that generates and presents a candidate for a method for renovating, repairing, or producing the object, based on information regarding the object acquired by the object information acquirer and a history of the detection information acquired by the detection information acquirer. According to this aspect, a method for renovation or the like suitable for a user can be appropriately selected and proposed, so that the user's convenience can be improved.

The candidate presentation unit may presume a condition, an attribute, or behavior of a resident or an animal living in the living space based on a history of the detection information and may generate a candidate based on a presumption result. According to this aspect, a method for renovation or the like suitable for the condition, an attribute, or behavior of a user can be appropriately selected and proposed, so that the user's convenience can be further improved.

The assistance device may further include a preference information acquirer that acquires preference information of a resident regarding design, and the assistance device may generate a candidate further based on preference information of the resident acquired by the preference information acquirer. According to this aspect, a method for renovation or the like suitable for preference information of a user can be appropriately selected and proposed, so that the user's convenience can be further improved.

The candidate presentation unit may generate a candidate using an algorithm that inputs information regarding the object, a history of the detection information, a condition, an attribute, or behavior of the resident or an animal, or the preference information and that outputs a candidate. According to this aspect, a method for renovation or the like suitable for a user can be appropriately selected and proposed, so that the user's convenience can be improved.

For the algorithm, machine learning may be performed based on information regarding the object, a history of the detection information, a condition, an attribute, or behavior of the resident or an animal, or the preference information, and information regarding a method for renovating, repairing, or producing the object. According to this aspect, a method for renovation or the like suitable for a user can be appropriately selected and proposed, so that the user's convenience can be improved.

For the algorithm, relearning may be performed based on information regarding the object renovated, repaired, or produced by the resident. According to this aspect, the accuracy of the algorithm can be improved, so that the user's convenience can be further improved.

The candidate presentation unit may present, to the resident, operations included in a method presented as the candidate that are classified into operations to be performed by the resident and operations to be asked of others. According to this aspect, a user can recognize an operation that can be performed by the user him or herself, so that the user's convenience can be improved.

Another aspect of the present invention relates to an assistance program. The assistance program causes a computer to function as: an object information acquirer that acquires information regarding an object installed in a living space, in which the object is to be reformed, repaired, or produced; a detection information acquirer that acquires a history of detection information detected in the past by a sensor installed in the living space; and a candidate presentation unit that generates and presents a candidate for a method for renovating, repairing, or producing the object, based on information regarding the object acquired by the object information acquirer and a history of the detection information acquired by the detection information acquirer. According to this aspect, a method for renovation or the like suitable for a user can be appropriately selected and proposed, so that the user's convenience can be improved.

### INDUSTRIAL APPLICABILITY

The present disclosure is applicable to an assistance device for assisting with renovation, repair, or production.

### REFERENCE SIGNS LIST

- 1: assistance system
- 30: image sensor
- 31: load sensor
- 32: opening/closing sensor
- 33: 3D sensor
- 41: home server
- 50: assistance device
- 60: control device
- 61: detection information acquirer
- 62: user information acquirer
- 63: object information acquirer
- 64: preference information acquirer
- 65: candidate presentation unit
- 66: learning unit
- 67: database update unit
- 68: information providing unit
- 70: storage device
- 71: user database
- 72: object database
- 73: renovation database
- 74: business operator database
- 75: candidate selecting algorithm
- 76: history information retaining unit

## Claims

1. An assistance device, comprising:
an object information acquirer that acquires information regarding an object installed in a living space, the object being to be reformed, repaired, or produced;
a detection information acquirer that acquires a history of detection information detected in the past by a sensor installed in the living space; and
a candidate presentation unit that generates and presents a candidate for a method for renovating, repairing, or producing the object, based on information regarding the object acquired by the object information acquirer and a history of the detection information acquired by the detection information acquirer.

2. The assistance device according to claim 1, wherein the candidate presentation unit presumes at least one of a condition, an attribute, or behavior of a resident or an animal living in the living space based on a history of the detection information and generates the candidate based on a presumption result.

3. The assistance device according to claim 1 or 2, further comprising a preference information acquirer that acquires preference information of a resident regarding design, wherein
the assistance device generates the candidate further based on preference information of the resident acquired by the preference information acquirer.

4. The assistance device according to claim 3, wherein the candidate presentation unit generates the candidate using an algorithm that inputs at least one of information regarding the object, a history of the detection information, a condition, an attribute, or behavior of the resident or an animal, or the preference information and that outputs the candidate.

5. The assistance device according to claim 4, wherein, for the algorithm, machine learning is performed based on at least one of information regarding the object, a history of the detection information, a condition, an attribute, or behavior of the resident or an animal, or the preference information, and information regarding a method for renovating, repairing, or producing the object.

6. The assistance device according to claim 5, wherein, for the algorithm, relearning is performed based on information regarding the object renovated, repaired, or produced by the resident.

7. The assistance device according to any one of claims 1 to 6, wherein the candidate presentation unit presents, to the resident, operations included in a method presented as the candidate that are classified into operations to be performed by the resident and operations to be asked of others.

8. An assistance program causing a computer to function as :
an object information acquirer that acquires information regarding an object installed in a living space, the object being to be reformed, repaired, or produced;
a detection information acquirer that acquires a history of detection information detected in the past by a sensor installed in the living space; and
a candidate presentation unit that generates and presents a candidate for a method for renovating, repairing, or producing the object, based on information regarding the object acquired by the object information acquirer and a history of the detection information acquired by the detection information acquirer.
